# EUROPÄISCHE PATENTANMELDUNG

(11) **EP 3 401 141 A1**
(43) Veröffentlichungstag der Anmeldung: **14.11.2018**
(21) Anmeldenummer: 17170772.2
(22) Anmeldetag: 12.05.2017
(51) Int. Cl.: B60J 7/02

(54) **GLEITFÜHRUNG**

(71) Anmelder: TB&C Technology GmbH, 35745 Herborn (DE)
(72) Erfinder: Groos, Hartmut, 35649 Bischoffen (DE); Faulstich, René, 35444 Biebertal (DE)
(74) Vertreter: Weilnau, Carsten

(57) **Zusammenfassung**

Die vorliegende Offenbarung betrifft eine Gleitführung mit:
- einer längserstreckten Führungsschiene (20), welche zumindest eine erste Führungsfläche (21) aufweist,
- einem an der Führungsschiene (20) verschiebbar gelagerten Gleiter (30), welcher einen Kunststoffkörper (36) mit zumindest einer ersten Gleitfläche (31) aufweist, wobei die erste Gleitfläche (31) gleitend mit der ersten Führungsfläche (21) der Führungsschiene (20) in Eingriff bringbar ist,
- zumindest einem Stoßabsorptionselement (50), welches in die erste Gleitfläche (31) integriert oder an der ersten Gleitfläche (31) angeordnet ist, wobei das Stoßabsorptionselement (50) ein Kunststoffmaterial aufweist, welches sich vom Material des Kunststoffkörpers (36) unterscheidet.

## Beschreibung

### Technisches Gebiet

Die vorliegende Entwicklung betrifft eine Gleitführung mit einer längserstreckten Führungsschiene und mit einem an der Führungsschiene verschiebbar gelagerten Gleiter. Die Gleitführung ist insbesondere für ein Schiebedach, bzw. für eine Schiebedachmechanik eines Kraftfahrzeugs vorgesehen. Insoweit betrifft die Entwicklung auch ein Schiebedach eines Kraftfahrzeugs, welches mit einer hier beschriebenen Gleitführung ausgestattet ist.

### Hintergrund

Schiebedächer von Kraftfahrzeugen weisen typischerweise einen an einer Dachstruktur des Kraftfahrzeugs verschiebbar gelagerten Deckel auf. Der Schiebedachdeckel kann insbesondere mit seinem der Fahrtrichtung abgewandten hinteren Ende in eine angehobene Stellung überführt werden, welche gemeinhin als Belüftungs- oder Teilöffnungsstellung zu bezeichnen ist. Zum Anstellen oder Ausstellen des Deckels ist ein Ausstellmechanismus vorgesehen, welcher typischerweise einen am Kraftfahrzeugdach schwenkbar gelagerten Hebel aufweist, dieser ist mit einem Ende am Kraftfahrzeugdach gelagert. An einem anderen Ende ist er mit einem Gleiter verbunden.

Der Gleiter steht wiederum verschiebbar mit einer längserstreckten Führungsschiene in Eingriff, welche fest mit dem Deckel verbunden ist. Aus der angehobenen oder ausgestellten Stellung kann der Schiebedachdeckel somit entlang der in Fahrzeuglängsrichtung verlaufenden Führungsschiene oder entlang mehrerer Führungsschienen aus einer geschlossenen Position entgegen der Fahrtrichtung in eine Öffnungsposition überführt werden.

So beschreibt beispielsweise die DE 10 2015 115 285 A1 eine Anordnung für ein bewegbares Dachelement für ein Kraftfahrzeug. Diese weist einen Schlitten auf, der in einem Führungskanal einer Schiene geführt ist.

Die längsverschiebliche Führung eines solchen Schlittens an einem Führungskanal soll zum einen möglichst spielfrei sein, damit der Deckel des Schiebedachs bei unweigerlichen Erschütterungen des Kraftfahrzeugs nicht wackelt oder Klappergeräusche verursacht. Zum anderen soll jedoch eine möglichst leichtgängige Führung eines solchen Schlittens am Führungskanal oder an einer Führungsschiene bereitgestellt werden, damit die für die Bewegung des Deckels vorgesehenen Antriebskomponenten, etwa mechanische Kraftübertragungselemente oder ein für die Bewegung vorgesehener Elektromotor möglichst platzsparend und kostengünstig implementiert werden können.

Es ist insoweit erstrebenswert, eine verbesserte Gleitführung, etwa für das Schiebedach eines Kraftfahrzeugs bereitzustellen, welche einerseits eine möglichst spielfreie Führung eines Gleiters an einer Führungsschiene ermöglicht und welche andererseits ein möglichst einfaches und wartungsarmes Verschieben des Gleiters entlang der Führungsschiene ermöglicht. Die Gleitführung soll ferner auch bei Einwirkung von Erschütterungen oder Vibrationen sowie bei Einleitung externer Kräfte möglichst geräuscharm bleiben und ein Klappern oder Vibrieren des Gleiters an der Führungsschiene möglichst verhindern. Die Gleitführung soll ferner möglichst kostengünstig implementierbar und massenproduktionstauglich sein.

### Erfindung und vorteilhafte Wirkungen

Diese Aufgabe wird mit einer Gleitführung und mit einem Schiebedach eines Kraftfahrzeugs gemäß der unabhängigen Patentansprüche gelöst. Vorteilhafte Ausgestaltungen sind Gegenstand abhängiger Patentansprüche.

Die demgemäß vorgesehene Gleitführung weist eine längserstreckte Führungsschiene mit zumindest einer ersten Führungsfläche auf. Die Gleitführung umfasst ferner einen in Längsrichtung an der Führungsschiene verschiebbar gelagerten Gleiter. Der Gleiter weist einen Kunststoffkörper mit zumindest einer ersten Gleitfläche auf. Die erste Gleitfläche ist dabei gleitend mit der ersten Führungsfläche der Führungsschiene in Eingriff bringbar. Die Gleitführung weist zumindest ein Stoßabsorptionselement auf, welches in die erste Gleitfläche integriert oder an der ersten Gleitfläche angeordnet ist. Das Stoßabsorptionselement weist ein Kunststoffmaterial auf, welches sich vom Material des Kunststoffkörpers unterscheidet.

Typischerweise weist das Kunststoffmaterial des Stoßabsorptionselements eine höhere Elastizität als das Material des Kunststoffkörpers des Gleiters auf. Auf diese Art und Weise kann das Stoßabsorptionselement etwaige Vibrationen oder mechanische Stöße, welche beispielsweise vom Gleiter auf die Führungsschiene übertragen werden, weitaus besser gedämpft und absorbiert werden.

Es ist ferner vorgesehen, dass das zumindest eine Stoßabsorptionselement lediglich lokal einen Teilbereich der ersten Gleitfläche des Gleiters einnimmt. Von daher ist das Stoßabsorptionselement lediglich lokal an hierfür vorgesehenen Stellen der Gleitfläche angeordnet oder in die Gleitfläche des Gleiters integriert. Die Gleitfläche kann daher nach wie vor eine Gleitfunktion erfüllen.

Das Kunststoffmaterial des Kunststoffkörpers des Gleiters, welches im Wesentlichen die Gleitfläche bildet, kann im Hinblick auf die Führungsfläche der Führungsschiene eine vergleichsweise geringe Haftreibung oder Gleitreibung aufweisen, sodass hierdurch eine besonders leichtgängige Verschiebung des Gleiters entlang der Führungsschiene ermöglicht wird. Das abschnittsweise in oder an der Gleitfläche ausgebildete Stoßabsorptionselement stellt nur eine geringe oder vernachlässigbare Beeinträchtigung der Gleiteigenschaften des Gleiters an der Führungsschiene dar.

Es bewirkt jedoch eine effektive Dämpfung etwaiger Stoßübertragungen oder Vibrationsübertragung zwischen der Führungsschiene und dem Gleiter. Mittels des zumindest einen Stoßabsorptionselements können etwaige mechanische Schwingungen, Stöße oder Vibrationen effektiv gedämpft werden. Mithin kann mittels des zumindest einen Stoßabsorptionselements eine absolut spielfreie und vibrationsarme Führung und ein dementsprechend wechselseitiger Eingriff von Führungsschiene und Gleiter bereitgestellt werden.

Nach einer weiteren Ausgestaltung weist das zumindest eine Stoßabsorptionselement zumindest ein thermoplastisches Elastomer oder eine Materialmischung unterschiedlicher thermoplastischer Elastomere auf. Ein thermoplastisches Elastomer kann im Vergleich zum Kunststoffkörper des Gleiters eine vergleichsweise hohe Elastizität und hierdurch relativ gute mechanische Dämpfungseigenschaften bereitstellen. Das zumindest eine Stoßabsorptionselement kann ein Kunststoffmaterial, beispielsweise einen synthetischen Kautschuk oder gummiähnlichen Kunststoff aufweisen, welcher eine Shore A-Härte von weniger als 35, weniger als 45, weniger als 55, weniger als 65 oder weniger als 75 aufweist. Insbesondere kann die Shore A-Härte des Stoßabsorptionselements im Bereich zwischen 30 und 75 liegen, vorzugsweise liegt die Shore A-Härte des Stoßabsorptionselements in einem Bereich zwischen 35 und 65, weiter vorzugsweise in einem Bereich zwischen 45 und 55.

Das Material des zumindest einen Stoßabsorptionselements kann ein TPE-S oder TPS Elastomer, d.h. zumindest ein Styrol-Blockcopolymer oder hieraus gebildete Polymergemische aufweisen. Auch kann das Material des Stoßabsorptionselements vollständig aus TPE-S oder TPS bestehen.

Nach einer weiteren Ausgestaltung weist der Kunststoffkörper einen faserverstärkten thermoplastischen Kunststoff oder eine Materialmischung unterschiedlicher thermoplastischer Kunststoffe auf. Der Kunststoffkörper kann insbesondere glasfaserverstärkt oder kohlefaserverstärkt sein. Der thermoplastische Kunststoff ist gegenüber dem Material des Stoßabsorptionselements vergleichsweise hart. Der Kunststoffkörper kann beispielsweise aus einem Polyamid, so zum Beispiel aus einem glasfaserverstärkten oder kohlefaserverstärkten Polyamid gefertigt sein, ein solches Material aufweisen oder, abgesehen von einem Metalleinleger und dem zumindest einen Stoßabsorptionselement, gänzlich aus einem solchen Material bestehen.

Sowohl das Material des Stoßabsorptionselements als auch das Material des Kunststoffkörpers kann ein spritzgussfähiger Kunststoff oder ein spritzgussfähiges Kunststoffgemisch sein. Insoweit kann der Gleiter nach einem Spritzgussverfahren, typischerweise nach einem Zwei- oder Mehrkomponenten Spritzgussverfahren hergestellt werden.

In einem ersten Spritzgussvorgang kann beispielsweise der Kunststoffkörper des Gleiters mittels Spritzguss gefertigt werden. In einem nachfolgenden Spritzgussvorgang kann beispielsweise das Stoßabsorptionselement an den Kunststoffkörper angespritzt werden.

Nach einer weiteren Ausgestaltung ist das zumindest eine Stoßabsorptionselement an die Gleitfläche des Gleiters angespritzt. Vorzugsweise ist der Gleiter ebenfalls als Spritzgussbauteil ausgestaltet. Es ist aber auch denkbar, dass Stoßabsorptionselement an einen anderweitig hergestellte Kunststoffkörper des Gleiters anzuspritzen. Bei dem Gleiter kann es sich auch um ein Kunststoffformteil oder um ein gepresstes, gefrästes oder gestanztes Bauteil handeln.

Nach einer weiteren Ausgestaltung sind in Längsrichtung der Gleitfläche mehrere voneinander beabstandete Stoßabsorptionselemente angeordnet. Das Vorsehen mehrerer in Längsrichtung der Gleitfläche voneinander beabstandeter Stoßabsorptionselemente verbessert eine Vibrationsdämpfung oder Stoßdämpfung für die Führung des Gleiters entlang der Führungsschiene. Die Stoßabsorptionselemente können hierbei in Längsrichtung der Führungsschiene bzw. in Längsrichtung des Gleiters betrachtet fluchtend zueinander angeordnet sein. Sie können aber auch transversal zur Längsrichtung d. h. quer zur Längserstreckung der Führungsschiene oder quer zur Längserstreckung des Gleiters zueinander versetzt angeordnet sein. Eine versetzte Anordnung kann beispielsweise für eine Dämpfung quer zur Längsrichtung der Führungsschiene, bzw. quer zur Längsrichtung des Gleiters von Vorteil sein.

Nach einer weiteren Ausgestaltung weist der Kunststoffkörper im Bereich der Gleitfläche zumindest eine Ausnehmung oder Vertiefungen zur Aufnahme des zumindest einen Stoßabsorptionselements auf. Das Vorsehen einer Vertiefung oder einer Aufnahme ermöglicht ein flächenbündiges Aufnehmen des Stoßabsorptionselements entlang der ersten Gleitfläche des Kunststoffkörpers. Ferner kann durch Bereitstellen einer Vertiefung oder einer Ausnehmung an der Gleitfläche eine besonders gute Haftung und mechanische Verbindung des Kunststoffkörpers mit dem Stoßabsorptionselement bereitgestellt werden.

Nach einer weiteren Ausgestaltung weist das zumindest eine Stoßabsorptionselement eine Anlagefläche auf, welche bündig zur angrenzenden Gleitfläche des Kunststoffkörpers zu liegen kommt. Alternativ kann die Anlagefläche des Stoßabsorptionselements auch von der Gleitfläche hervorstehen. Ein zumindest geringfügig von der Gleitfläche hervorstehendes Stoßabsorptionselement kann eine verbesserte Dämpfung oder Stoßabsorption zwischen dem Gleiter und der Führungsschiene bereitstellen. Etwaige Vibrationen oder mechanische Stöße können auf diese Art und Weise unmittelbar in das Stoßabsorptionselement eingebracht werden, welches insbesondere zur Absorption solcher Stöße oder Vibrationen ausgestaltet ist.

Nach einer weiteren Ausgestaltung weist der Gleiter einen strukturverstärkenden Metalleinleger auf. Der Kunststoffkörper des Gleiters kann insbesondere um den strukturverstärkenden Metalleinleger herum gespritzt sein. Der Kunststoffkörper kann insoweit, insbesondere bei Ausbildung des Gleiters als Kunststoff-Spritzgussbauteil als Umspritzung des Metalleinleger ausgestaltet sein. Der Metalleinleger verleiht dem Gleiter eine verbesserte mechanische Steifigkeit. Ferner kann mittels des strukturverstärkenden Metalleinlegers eine besonders sichere und dauerhaltbare, quasi unlösbare formschlüssige Verbindung des Gleiters an der Führungsschiene bereitgestellt werden. Der Metalleinleger kann ein Querschnittsprofil aufweisen, welches formschlüssig mit dem Querschnittsprofil der Führungsschiene verbindbar ist. Auf diese Art und Weise kann der Gleiter bzw. auch sein Metalleinleger formschlüssig an der Führungsschiene gehalten werden und lediglich in Längsrichtung der Führungsschiene entlang der Führungsschienen bewegt werden.

Nach einer weiteren Ausgestaltung weist das Material des Stoßabsorptionselements eine Elastizität auf, welche sich infolge einer Krafteinwirkung auf das Stoßabsorptionselement verändert. Insbesondere weist das Material des Stoßabsorptionselements eine lastabhängige Elastizität auf. Das Material des Stoßabsorptionselements kann dynamisch auf extern einwirkende Kräfte reagieren. Das Material des Stoßabsorptionselements kann infolge einer gesteigerten externen Krafteinwirkung seine Elastizität steigern. Mithin kann die Elastizität des Materials des Stoßabsorptionselements 50 antiproportional mit der extern einwirkenden Kraft sinken.

Die Dämpfung bzw. die Dämpfungswirkung des Stoßabsorptionselements kann somit lastabhängig variieren. Bei zunehmenden extern auf das Stoßabsorptionselement einwirkenden Kräften kann dies eine gesteigerte Dämpfungswirkung bereitstellen. Bei vergleichsweise geringen externen Kräften kann das Stoßabsorptionselement eine vergleichsweise geringe Elastizität aufweisen, um insbesondere eine leichtgängige Führung des Gleiters entlang der Führungsschiene zu ermöglichen.

Es sind aber auch anderweitige Ausgestaltungen des Materials des Stoßabsorptionselements denkbar, nämlich dergestalt, dass das Material infolge einer ansteigenden externen Krafteinwirkung eine höhere Elastizität aufweist.

Nach einer weiteren Ausgestaltung der Gleitführung weist der Gleiter zumindest eine zweite Gleitfläche auf, welche mit einer hierzu korrespondierend ausgestalteten zweiten Führungsfläche der Führungsschiene in Eingriff bringbar ist. Die erste und die zweite Gleitfläche können unter einem vorgegebenen Winkel zueinander ausgerichtet sein. Beispielsweise können die erste und die zweite Gleitfläche Teilflächen einer Schwalbenschwanzführung oder einer C-förmigen Führung darstellen.

Der Gleiter kann ferner weitere Gleitflächen, beispielsweise eine dritte und/oder eine vierte Gleitfläche aufweisen, wobei die dritte Gleitfläche mit einer hierzu korrespondierend ausgestalteten dritten Führungsfläche der Führungsschiene in Eingriff bringbar ist und/oder wobei die vierte Gleitfläche des Gleiters mit einer hierzu korrespondierend ausgestalteten vierten Führungsfläche der Führungsschiene in Eingriff bringbar ist. Auf diese Art und Weise und durch Bereitstellen mehrerer unter vorgegebenen Winkeln zueinander ausgerichteten Gleitflächen kann eine besonders stabile und formschlüssige Befestigung des Gleiters an der Führungsschiene erreicht werden. Sämtliche Gleitflächen erstrecken sich entlang der Längsrichtung der Führungsschiene, um eine verschiebbare Führung des Gleiters entlang der Führungsschiene zu ermöglichen.

Das zumindest eine Stoßabsorptionselement kann zumindest an einer der Gleitflächen, an zumindest zwei der Gleitflächen, an zumindest drei der Gleitflächen oder an sämtlichen Gleitflächen des Gleiters vorgesehen sein.

Auch können mehrere Stoßabsorptionselemente senkrecht zur Längsrichtung der Führungsschienen an mehreren Gleitflächen ausgestaltet sein und dabei in einer gemeinsamen Ebene senkrecht zur Längserstreckung der Führungsschiene liegen. Es ist aber auch denkbar, dass beispielsweise einzelne Stoßabsorptionselemente an der ersten Gleitfläche angeordnet sind und dass weitere Stoßabsorptionselemente an der zweiten Gleitfläche angeordnet sind, wobei die Stoßabsorptionselemente der zweiten Gleitfläche in Längsrichtung des Gleiters bzw. in Längsrichtung der Führungsschiene zu den Stoßabsorptionselementen der ersten Gleitfläche versetzt oder überlappend hierzu angeordnet sind.

Durch die Variation der Geometrien einzelner Stoßabsorptionselemente und deren verteilte Anordnung auf mehrere Gleitflächen als auch entlang der Gleitflächen kann das Stoßabsorptionsverhalten des Gleiters an der Führungsschiene bedarfsgerecht angepasst werden. Gleichermaßen kann mittels unterschiedlicher oder variierender thermoplastischer Elastomere oder entsprechender Materialmischungen für das Stoßabsorptionselement unterschiedliche und jeweils bedarfsgerechte, auf den Einzelfall abgestimmte Stoßabsorptionseffekte zwischen Gleiter und Führungsschiene verwirklicht werden.

Nach einer weiteren Ausgestaltung weist der Gleiter einen im Wesentlichen ebenen Boden auf, an dessen gegenüberliegenden Seiten jeweils ein Schenkel abragt. Ein erster Schenkel und ein zweiter Schenkel, welche an gegenüberliegenden Seiten des Bodens des Gleiters ausgebildet sind ragen in dieselbe Richtung vom Boden, beispielsweise nach oben ab. An den dem Boden abgewandten Enden der Schenkel ist jeweils ein zum gegenüberliegenden Schenkel ragender Flanschabschnitt angeordnet. Der Flanschabschnitt kann sich beispielsweise parallel zum Boden erstrecken. Auf diese Art und Weise kann zwischen dem Flanschabschnitt und dem Boden eine C-förmige oder U-förmige Nut gebildet werden, die der Aufnahme eines entsprechend oder hierzu korrespondierend ausgestalteten seitlich abragenden Flanschabschnitts der Führungsschiene dient.

Die Führungsschiene kann z.B. ein Hut- oder U-förmiges Querschnittsprofil mit seitlich nach außen abragenden Flanschabschnitten aufweisen, die zwischen dem Boden und den Flanschabschnitten der Schenkel des Gleiters zu liegen kommen können. Im Bereich eines jeden Schenkels können auf Seiten des Gleiters bis zu vier Gleitflächen und aufseiten der Führungsschiene ebenfalls bis zu vier Führungsflächen bereitgestellt werden, die bei einer formschlüssigen Verbindung von Führungsschiene und Gleiter in Längsrichtung der Führungsschiene gleitend miteinander in Eingriff stehen.

Nach einer weiteren Ausgestaltung ist die zumindest eine Gleitfläche am Boden des Gleiters, an einer Innenseite eines Schenkels des Gleiters, an einer dem Boden zugewandten Unterseite eines Flanschabschnitts oder an einer dem gegenüberliegenden schenkelzugewandten Innenseite eines Flanschabschnitts ausgebildet oder angeordnet. Auch können mehrere Gleitflächen an mehreren der hier genannten Stellen des Gleiters angeordnet sein. Jede der Gleitflächen kann mit zumindest einem Stoßabsorptionselement versehen sein, wobei die Stoßabsorptionselemente mehrerer Gleitflächen in Längsrichtung der Führungsschiene bzw. in Längsrichtung des Gleiters versetzt zueinander, so z.B. in einem vorgegebenen Abstand zueinander, überlappend oder teils überlappend angeordnet sein können.

Nach einer weiteren Ausgestaltung steht der Gleiter mit der Führungsschiene gleitend in Eingriff. Er ist hierbei verschiebbar an der Führungsschiene gelagert. Nach einem weiteren Aspekt und unabhängig von der Gleitführung ist ferner ein isolierter Gleiter vorgesehen, welcher an der zuvor beschriebenen Führungsschiene verschiebbar gelagert ist. Der Gleiter weist einen Kunststoffkörper mit zumindest einer ersten Gleitfläche auf, wobei die erste Gleitfläche gleitend mit der ersten Führungsfläche der Führungsschiene in Eingriff bringbar ist. Der Gleiter weist ferner zumindest ein Stoßabsorptionselement auf, welches in die erste Gleitfläche integriert oder an der ersten Gleitfläche angeordnet ist. Das Stoßabsorptionselement weist ein Kunststoffmaterial auf, welches sich vom Material des Kunststoffkörpers unterscheidet.

Insoweit betrifft die Erfindung auch einen isolierten Gleiter, welcher isoliert und separat von der Führungsschiene gefertigt werden kann und welcher erst beim Zusammenbau der Gleitführung mit der anderweitig bereitgestellten Führungsschiene in Eingriff gebracht wird.

Die Führungsschiene ist typischerweise aus Metall, typischerweise aus einem Stahlblech gebildet. Auch der Einleger des Gleiters ist typischerweise aus einem Stahlblech gefertigt.

Nach alledem ist ferner und nach einem weiteren Aspekt ein Schiebedach eines Kraftfahrzeugs mit einem verschiebbar am Dach des Kraftfahrzeugs beweglichen Deckel und mit einer zuvor beschriebenen Gleitführung vorgesehen.

Nach einem weiteren Aspekt betrifft die Erfindung ferner ein Kraftfahrzeug, welches mit einem derartigen Schiebedach ausgestattet ist.

### Kurzbeschreibung der Figuren

Weitere Ziele, Merkmale sowie vorteilhafte Anbindungsmöglichkeiten des Gleiters, der Gleitführung und des Schiebedach werden in der nachfolgenden Beschreibung eines Ausführungsbeispiels erläutert. Hierbei zeigen:
- Fig. 1: eine schematische Darstellung eines Fahrzeugdachs mit einem Schiebedach,
- Fig. 2: eine perspektivische Ansicht einer Unterseite eines Deckels eines Schiebedachs,
- Fig. 3: eine perspektivische Darstellung eines Gleiters der Gleitführung,
- Fig. 4: einen Längsschnitt C-C durch den Gleiter gemäß Fig. 3,
- Fig. 5: einen Querschnitt A-A durch den Gleiter,
- Fig. 6: einen Querschnitt B-B durch den Gleiter und
- Fig. 7: einen Querschnitt von Führungsschiene und Gleiter wenn diese außer Eingriff sind.

### Detaillierte Beschreibung

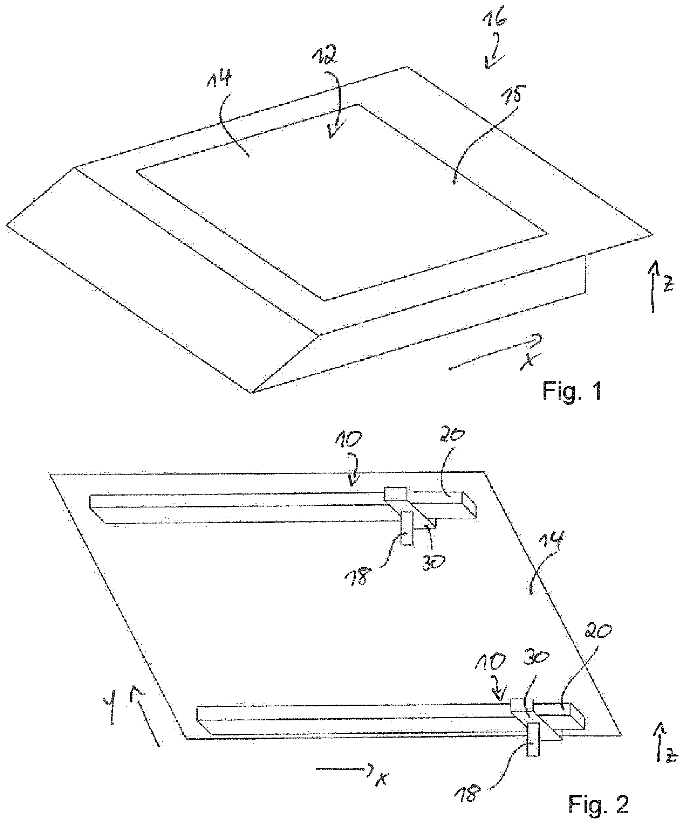

Das in Fig. 1 schematisch dargestellte Kraftfahrzeugdach 16 weist ein Schiebedach 12 mit einem typischerweise in Fahrzeuglängsrichtung (x) verschiebbaren Deckel 14 auf. Wie insbesondere in Fig. 2 gezeigt ist an dem starren Deckel 14, welcher zum Beispiel auch als Glasdeckel ausgestaltet sein kann, zumindest eine längserstreckte Führungsschiene 20 angeordnet. Im gezeigten Ausführungsbeispiel sind an dem Deckel 14 zwei in Fahrzeugquerrichtung (y) voneinander beabstandete Führungsschienen 20 am Deckel 14 angeordnet. Kraftfahrzeugseitig, d. h. an der Dachstruktur ist für jede der Führungsschienen 20 ein Gleiter 30 vorgesehen.

Der Gleiter 30 steht mit der Führungsschiene 20 jeweils längsverschieblich und formschlüssig in Eingriff. Der Gleiter 30 selbst kann an einem schwenkbaren Hebel 18 gelagert sein. In Fig. 2 ist eine nach oben ausgestaltete Betriebsstellung des Hebels 18 gezeigt. In dieser Stellung ragt der Hebel 18 zumindest bereichsweise nach oben in Richtung der Fahrzeughochachse (z), um insbesondere ein der Fahrtrichtung des Kraftfahrzeugs abgewandtes hinteres Ende 15 des Deckels 14 in eine angehobene Position zu überführen, aus welcher der Deckel 14 entlang der Oberseite des Fahrzeugdachs 16 in eine vorliegend nicht gezeigte Öffnungsstellung überführbar insbesondere verschiebbar ist.

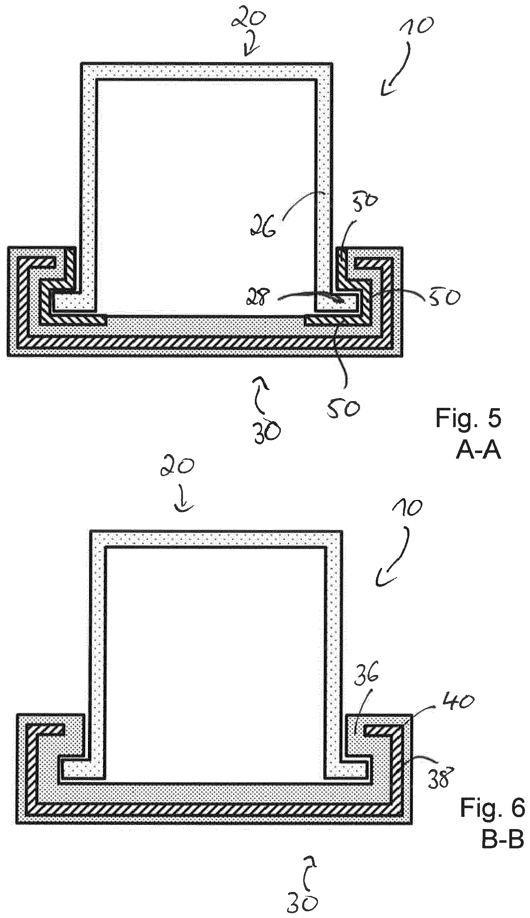

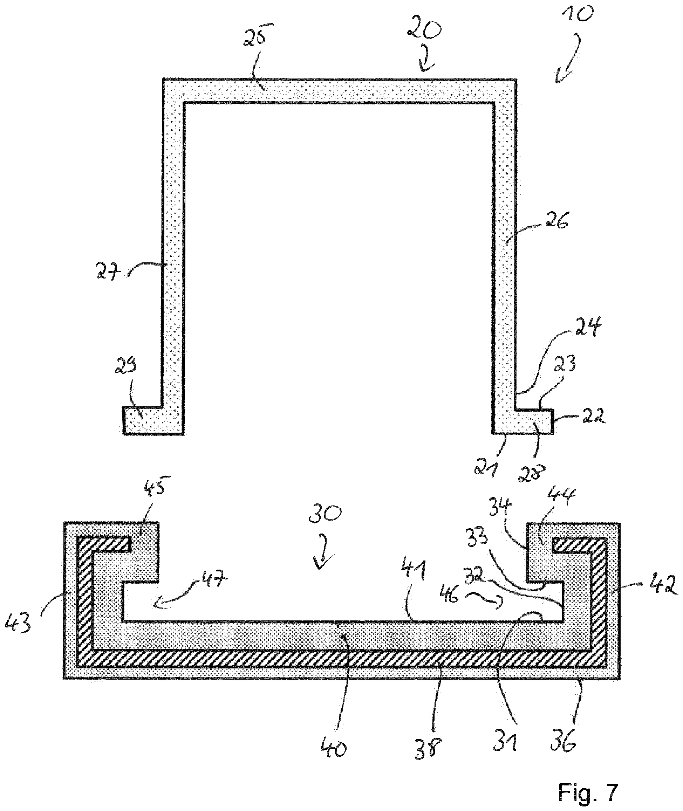

Das Schiebedach 12 weist insoweit zwei in Fahrzeugquerrichtung (y) voneinander beabstandete Gleitführungen 10 auf. Die Gleitführung 10, welche in den Figuren 5 bis 7 im Querschnitt dargestellt ist weist eine längserstreckte Führungsschiene 20 auf. Diese ist typischerweise starr mit dem Deckel 14 des Schiebedachs 12 verbunden oder hiermit mechanisch gekoppelt. Wie anhand der Figuren 5 bis 7 ersichtlich weist die Führungsschiene 20 ein im Querschnitt U-förmiges Profil oder auch ein Schwalbenschwanzprofil auf. Die Führungsschiene 20 kann beispielsweise unten offen ausgestaltet sein und kann mit einem obenliegenden Bodenabschnitt 25 mit dem Deckel 14 verbunden sein.

An gegenüberliegenden Längsseiten des Bodenabschnitts 25 erstrecken sich zwei gegenüberliegende Schenkel 26, 27. Diese weisen an ihrem dem Bodenabschnitt 25 abgewandten Ende nach außen ragende Flanschabschnitte 28, 29 auf. Mittels der Flanschabschnitte 28, 29 ist eine zweidimensionale formschlüssige Fixierung der Führungsschiene 20 am Gleiter 30 oder umgekehrt eine zweidimensionale formschlüssige Fixierung des Gleiters 30 an der Führungsschiene 20 möglich. Der Gleiter 30 weist ein mit dem Querschnittsprofil der Führungsschiene 20 korrespondierenden Innenquerschnitt auf, sodass der Gleiter die Führungsschiene bereichsweise umschließend oder bereichsweise umfassend in Längsrichtung an der Führungsschiene 20 verschiebbar ist.

Der Gleiter 30 weist vorliegend einen Metalleinleger 38 auf. Der Gleiter 30 weist ferner einen Kunststoffkörper 36 auf. Dieser kann als Umspritzung 40 des Einlegers 38 gebildet sein. Insbesondere kann der Gleiter 30 als Spritzgussbauteil, insbesondere als Kunststoffspritzgussbauteil ausgestaltet sein. Der Kunststoffkörper 36 kann aus einem vergleichsweise stabilen und festen Kunststoff, beispielsweise aus einem thermoplastischen Kunststoff, etwa aus Polyamid gefertigt sein. Der Kunststoffkörper 36 kann faserverstärkt, insbesondere glasfaserverstärkt oder kohlefaserverstärkt ausgestaltet sein.

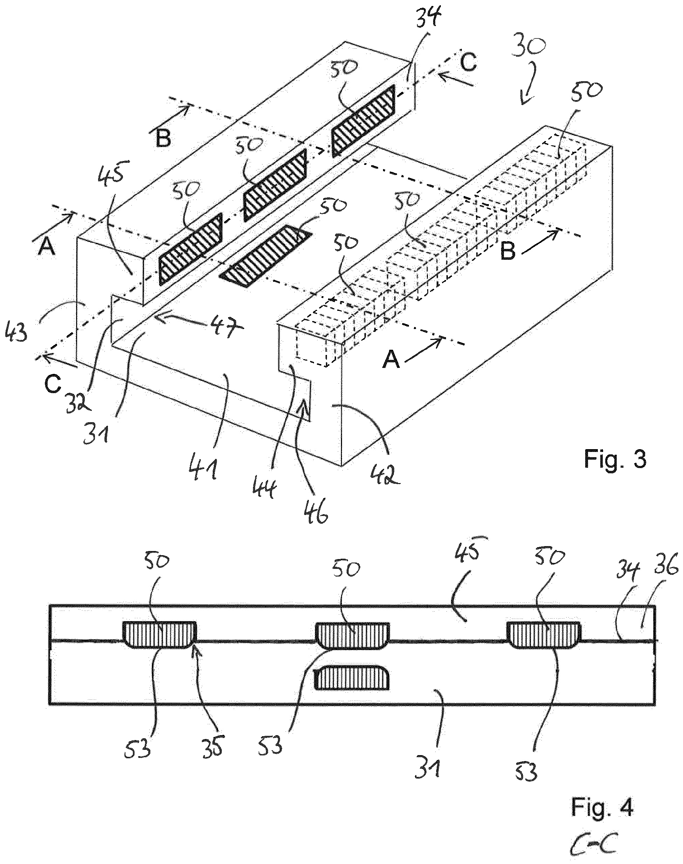

Der Kunststoffkörper 36 kann insoweit als Umspritzung 40 des Einlegers 38 betrachtet werden. Wie insbesondere in Fig. 3 dargestellt weist der Gleiter 30 einen Boden 41 auf, welcher im Wesentlichen eben ausgestaltet ist. An gegenüberliegenden Seiten des Bodens 41 erstrecken sich ein rechter Schenkel 42 und ein linker Schenkel 43. Der Abstand der Schenkel 42, 43, insbesondere deren Innenabstand entspricht dem Abstand der Flanschabschnitte 28, 29 der Führungsschiene 20, insbesondere dem Außenabstand zwischen dem Flanschabschnitt 28 und dem Flanschabschnitten 29.

Die Schenkel 42, 43 des Gleiters 30 erstrecken sich in etwa parallel zueinander. Sie können senkrecht vom Boden 41 nach oben abragen. Sie können aber auch, etwa unter Bildung einer Schwalbenschwanzführung unter einem vorgegebenen Winkel zum Boden 41 ausgerichtet sein. Der Winkel zwischen dem Boden und den Schenkeln 42, 43 beträgt mindestens 45°, typischerweise höchstens 90°. An den dem Boden 41 abgewandten Enden der Schenkel 42, 43 ist jeweils ein nach innen ragenden Flanschabschnitt 44, 45 angeordnet oder angeformt. Ein Innenabstand zwischen den gegenüberliegenden Flanschabschnitten 44, 45 ist kleiner als der Außenabstand der Flanschabschnitte 28, 29 der Führungsschiene. Auf diese Art und Weise kann eine formschlüssige Verbindung von Führungsschiene 20 und Gleiter 30 bereitgestellt werden. Zwischen den Flanschabschnitten 44, 45 und dem Boden 41 ist jeweils eine längserstreckte Nut 46, 47, insbesondere eine Führungsnut ausgebildet, in welcher die seitlich nach außen abragenden Flanschabschnitte 28, 29 der Führungsschiene 20 geführt sind.

Die miteinander in Eingriff stehenden und gleitend aneinander anliegenden Flächenabschnitte der Führungsschiene 20 und des Gleiters 30 werden aufseiten der Führungsschiene nachfolgend als Führungsfläche 21, 22, 23, 24 bezeichnet. Die hiermit korrespondierenden Flächen des Gleiters 30 werden nachfolgend als Gleitfläche 31, 32, 33, 34 bezeichnet. Der Gleiter 30 kann in der vorliegenden Ausgestaltung zumindest vier Gleitflächen aufweisen. Eine erste Gleitfläche 31 befindet sich am Boden 41 angrenzend an die Schenkel 42, 43, eine zweite Gleitfläche 32 befindet sich an einer Innenseite der Schenkel 42, 43. Eine dritte Gleitfläche 33 befindet sich an einer dem Boden 41 zugewandten Unterseite eines Flanschabschnitts 44, 45 und eine vierte Gleitfläche 34 befindet sich an einer dem jeweils gegenüberliegenden Flanschabschnitt oder dem jeweils gegenüberliegenden Schenkel zugewandten Innenseite eines Flanschabschnitts 44, 45.

An zumindest einer der Gleitflächen 31, 32, 33, 34 ist zumindest ein Stoßabsorptionselement 50 angeordnet. Das Stoßabsorptionselement 50 weist ein Kunststoffmaterial auf, welches stoßabsorbierende Eigenschaften bereitstellt. Das Stoßabsorptionselement 50 enthält zumindest ein thermoplastisches Elastomer oder eine Materialmischung unterschiedlicher thermoplastischer Elastomere.

Das Stoßabsorptionselement weist zumindest ein thermoplastisches Elastomer auf oder kann auch vollständig aus einem thermoplastischen Elastomer oder mehreren thermoplastischen Elastomer bestehen. Das Stoßabsorptionselement 50, insbesondere dessen Material oder Materialmischung weist eine Elastizität auf, die höher ist als die Elastizität des Materials des Kunststoffkörpers 36. Entlang einer Gleitfläche 31 können mehrere solcher Stoßabsorptionselemente 50 in Längsrichtung des Gleiters 30 beabstandet zueinander angeordnet sein.

In den Darstellungen gemäß der Figuren 3 und 4 sind an einer Gleitfläche 34 in Längsrichtung des Gleiters 30 drei Stoßabsorptionselemente 50 angeordnet. An der parallel hierzu verlaufenden Gleitfläche 31 ist lediglich ein einziges Stoßabsorptionselement 50 angeordnet. Dieses ist im gezeigten Ausführungsbeispiel überlappend oder zumindest bereichsweise überlappend mit dem mittleren der drei Stoßabsorptionselemente50 angeordnet, welche an der Gleitfläche 34 des Gleiters 30 ausgebildet sind.

Wie insbesondere in Fig. 4 gezeigt weisen die Stoßabsorptionselemente 50 jeweils eine Anlagefläche 53 auf, welche zumindest geringfügig von der betreffenden Gleitfläche 34 hervorsteht. Hierdurch können die Stoßabsorptionselemente 50 besonders gut mechanische Schwingungen und Relativbewegungen zwischen dem Gleiter 30 und der Führungsschiene 20 dämpfen oder absorbieren. Es sind aber auch andere Ausgestaltungen denkbar, bei welchen eine Anlagefläche 53 der Stoßabsorptionselemente 50 flächenbündig in die angrenzende Gleitfläche 31, 32, 33, 34 integriert sind.

Ferner ist denkbar, dass die Anlagefläche 53 der Stoßabsorptionselemente 50 parallel zur angrenzenden Gleitfläche 31, 32, 33, 34 verläuft. Randbereiche, insbesondere die in Verschieberichtung vorn und/oder hinten liegenden Randbereiche der Stoßabsorptionselemente 50 bzw. deren Anlageflächen 53 können eine Abschrägung oder Fase aufweisen. Dies kann für ein besonders leichtgängiges Verschieben des Gleiters 30 entlang der Führungsschiene 20 von Vorteil sein.

Wie insbesondere in Fig. 5 gezeigt können sämtliche Gleitflächen 31, 32, 33, 34 jeweils mit einem Stoßabsorptionselement 50 versehen sein. Insoweit ist denkbar, die gesamte Nut 46, 47 sowie die hieran angrenzenden Bereiche, beispielsweise die Innenfläche der Flanschabschnitte 44, 45 durchgehend mit einem in etwa U-förmigen oder S-förmigen Stoßabsorptionselement 50 auszukleiden.

Die Stoßabsorptionselemente 50 können in Längsrichtung versetzt sowie regelmäßig und/oder unregelmäßig in Längsrichtung beabstandet am Gleiter 30 angeordnet oder hierin integriert sein. Die Stoßabsorptionselemente 50 können insbesondere an den Kunststoffkörper 36 angespritzt sein. Sowohl das Material der Stoßabsorptionselemente 50 als auch das Material des Kunststoffkörpers 36 kann einen spritzgussfähigen Kunststoff oder ein spritzgussfähiges Kunststoffgemisch, gegebenenfalls faserverstärkt, aufweisen.

Es kann insbesondere vorgesehen sein, dass in einem ersten Spritzgussprozess der Metalleinleger 38 mit einer Umspritzung 40 zur Bildung des Kunststoffkörpers 36 versehen wird. Im Kunststoffkörper 36 können einzelne Vertiefungen oder Ausnehmungen 35 vorgesehen werden, wie diese beispielsweise in Fig. 4 angedeutet sind. In jene Vertiefungen 35 können in einem nachfolgenden Spritzgussprozess und unter Verwendung des thermoplastischen Elastomers oder eines entsprechenden Materialgemisches die Stoßabsorptionselemente 50 bedarfsgerecht an den Kunststoffkörper 36 und damit an den Gleiter 30 angespritzt werden. Dies ermöglicht einen besonders fertigungsrationellen und kostengünstigen Herstellungsprozess des Gleiters 30.

Die Stoßabsorptionselemente 50 können sich nahtlos von einer ersten Gleitfläche in eine zweite Gleitfläche erstrecken. Ferner ist denkbar, dass sich die Stoßabsorptionselemente 50 von einer ersten bis in eine dritte Gleitfläche erstrecken oder dass sich die Stoßabsorptionselemente durchgängig von der ersten Gleitfläche 31 über die zweite Gleitfläche 32 über die dritte Gleitfläche 33 bis in die vierte Gleitfläche 34 hinein erstrecken. In Längsrichtung des Gleiters 30 können ferner Bereiche der Gleitflächen 31, 32, 33, 34 vorgesehen werden, welche frei von Stoßabsorptionselementen 50 sind. Ferner ist denkbar, dass in Längsrichtung des Gleiters 20 betrachtet an unterschiedlichen Gleitflächen 31, 32, 33, 34 in Längsrichtung versetzt oder zueinander überlappend angeordnet Stoßabsorptionselemente 50 angeordnet sind.

### Bezugszeichenliste

- 10: Gleitführung
- 12: Schiebedach
- 14: Deckel
- 15: Ende
- 16: Fahrzeugdach
- 18: Hebel
- 20: Führungsschiene
- 21: Führungsfläche
- 22: Führungsfläche
- 23: Führungsfläche
- 24: Führungsfläche
- 25: Bogenabschnitt
- 26: Schenkel
- 27: Schenkel
- 28: Flanschabschnitt
- 29: Flanschabschnitt
- 30: Gleiter
- 31: Gleitfläche
- 32: Gleitfläche
- 33: Gleitfläche
- 34: Gleitfläche
- 35: Ausnehmung
- 36: Kunststoffkörper
- 38: Einleger
- 40: Umspritzung
- 41: Boden
- 42: Schenkel
- 43: Schenkel
- 44: Flanschabschnitt
- 45: Wandabschnitt
- 46: Nut
- 47: Nut
- 50: Stoßabsorptionselement
- 53: Anlagefläche

## Patentansprüche

1. Gleitführung mit:
- einer längserstreckten Führungsschiene (20), welche zumindest eine erste Führungsfläche (21) aufweist,
- einem an der Führungsschiene (20) verschiebbar gelagerten Gleiter (30), welcher einen Kunststoffkörper (36) mit zumindest einer ersten Gleitfläche (31) aufweist, wobei die erste Gleitfläche (31) gleitend mit der ersten Führungsfläche (21) der Führungsschiene (20) in Eingriff bringbar ist,
- zumindest einem Stoßabsorptionselement (50), welches in die erste Gleitfläche (31) integriert oder an der ersten Gleitfläche (31) angeordnet ist, wobei das Stoßabsorptionselement (50) ein Kunststoffmaterial aufweist, welches sich vom Material des Kunststoffkörpers (36) unterscheidet.

2. Gleitführung nach Anspruch 1, wobei das Stoßabsorptionselement (50) zumindest ein thermoplastisches Elastomer oder eine Materialmischung unterschiedlicher thermoplastischer Elastomere enthält.

3. Gleitführung nach einem der vorhergehenden Ansprüche, wobei der Kunststoffkörper (36) einen faserverstärkten thermoplastischen Kunststoff oder eine Materialmischung unterschiedlicher thermoplastischer Kunststoffe aufweist.

4. Gleitführung nach einem der vorhergehenden Ansprüche, wobei das zumindest eine Stoßabsorptionselement (50) an die Gleitfläche (31) angespritzt ist.

5. Gleitführung nach einem der vorhergehenden Ansprüche, wobei in Längsrichtung der Gleitfläche (31) mehrere voneinander beabstandete Stoßabsorptionselemente (50) angeordnet sind.

6. Gleitführung nach einem der vorhergehenden Ansprüche, wobei der Kunststoffkörper (36) im Bereich der Gleitfläche (31) zumindest eine Ausnehmung (35) oder Vertiefung zur Aufnahme des zumindest einen Stoßabsorptionselements (50) aufweist.

7. Gleitführung nach einem der vorhergehenden Ansprüche, wobei das zumindest eine Stoßabsorptionselement (50) eine Anlagefläche (53) aufweist, welche bündig zur angrenzenden Gleitfläche (31) zu liegen kommt oder welche von der Gleitfläche (31) hervorsteht.

8. Gleitführung nach einem der vorhergehenden Ansprüche, wobei der Gleiter (30) einen strukturverstärkenden Metalleinleger (38) aufweist.

9. Gleitführung nach einem der vorhergehenden Ansprüche, wobei das Material des Stoßabsorptionselements (50) eine Elastizität aufweist, welche sich infolge einer Krafteinwirkung auf das Stoßabsorptionselement verändert.

10. Gleitführung nach einem der vorhergehenden Ansprüche, wobei der Gleiter (30) zumindest eine zweite Gleitfläche (32) aufweist, welche mit einer hierzu korrespondierend ausgestalteten zweiten Führungsfläche (22) der Führungsschiene (20) in Eingriff bringbar ist.

11. Gleitführung nach einem der vorhergehenden Ansprüche, wobei der Gleiter (30) einen im Wesentlichen ebenen Boden (41) aufweist, an dessen gegenüberliegenden Seiten jeweils ein Schenkel (42, 43) abragt und wobei an den dem Boden (41) abgewandten Enden der Schenkel (42, 43) jeweils ein zum gegenüberliegenden Schenkel (42, 43) ragender Flanschabschnitt (44, 45) angeordnet ist.

12. Gleitführung nach Anspruch 11, wobei die zumindest eine Gleitfläche (31) am Boden (41), an einer Innenseite eines Schenkels (42, 43), an einer dem Boden (41) zugewandten Unterseite eines Flanschabschnitts (44, 45) oder an einer dem gegenüberliegenden Schenkel zugewandten Innenseite eines Flanschabschnitts (44, 45) ausgebildet ist.

13. Gleitführung nach einem der vorhergehenden Ansprüche, wobei der Gleiter (30) mit der Führungsschiene (20) gleitend in Eingriff steht.

14. Schiebedach eines Kraftfahrzeugs mit einem verschiebbar am Dach eines Kraftfahrzeugs beweglichen Deckel (14) und mit einer Gleitführung (10) nach einem der vorhergehenden Ansprüche.
